# EUROPEAN PATENT SPECIFICATION

(11) **EP 4 260 615 B1**
(45) Date of publication and mention of the grant of the patent: **18.06.2025**
(21) Application number: 20965240.3
(22) Date of filing: 09.12.2020
(51) Int. Cl.: H04W 52/24, H04W 24/02, H04W 52/02, H04W 52/34, G06N 20/00

(54) **CONTROLLING UPLINK POWER LEVEL OF RADIO CELLS**
STEUERUNG DES UPLINK-LEISTUNGSPEGELS VON FUNKZELLEN
COMMANDE DU NIVEAU DE PUISSANCE DE LIAISON MONTANTE DE CELLULES RADIO

(43) Date of publication of application: 18.10.2023
(73) Proprietor: Telefonaktiebolaget LM Ericsson (publ), 164 83 Stockholm (SE)
(72) Inventor: BRISEBOIS, Art, Westport Point, Massachusetts 02791 (US); FRANK, Philipp, 28860 MADRID Madrid (ES); MARTIN CUERDO, Raul, 28430 MADRID Madrid (ES); RODRIGUEZ MEMBRIVE, Jaime, 29017 Malaga Málaga (ES); BANERJEE, Serene, Chennai, 600125 (IN); RAMESH, Shweta, Chennai 600041 (IN); JALLI, Bhavika Reddy, ACTON, Massachusetts 01720 (US)
(74) Representative: Ericsson
(86) International application number: PCT/SE2020/051185
(87) International publication number: WO 2022/124954

(56) References cited:
- EP-A1- 3 010 290
- WO-A2-2010/107907
- GB-A- 2 510 897
- US-A1- 2016 081 036
- US-B1- 10 039 016
- H. PARK ET AL.: "Adaptive Power Control using Reinforcement Learning in 5G Mobile Networks", 2020 INTERNATIONAL CONFERENCE ON INFORMATION NETWORKING (ICOIN, 2 March 2020 (2020-03-02), pages 409 - 414, XP033730254, DOI: 10.1109/ICOIN48656.2020.9016566
- Y. LI ET AL.: "Energy-efficient cluster division for multi- cell joint transmission technology", WIRELESS COMMUNICATION AND MOBILE COMPUTING, vol. 16, 2016, pages 3045, XP055952621, DOI: 10.1002/wcm.2746
- D. TEMOA ET AL.: "A Reinforcement Learning Based Intercell Interference Coordination in LTE Networks", FUTURE INTERNET, vol. 2019, 2019, pages 19, XP055952625, DOI: 10.3390/fi11010019; abstract

## Description

### TECHNICAL FIELD

The present disclosure relates to a method of controlling uplink power levels of radio cells in a wireless communications network and a device performing the method.

### BACKGROUND

Uplink power adjustment of wireless communication devices via a so-called nominal power parameter (poNominal) is used to attain a target uplink power spectral density for uplink coverage and capacity optimization in a cellular communication system.

The power of a wireless communication device is increased or decreased as required to achieve sufficient uplink signal strength at or near the poNominal target value of a radio cell in which the wireless communication device is located, the poNominal target value being broadcasted in the cell in a system information block (SIB). A higher poNominal value allows a wireless communication device to transmit at a higher power, thereby increasing uplink signal-to-interference-and-noise ratio (SINR). In theory, this SINR increase will improve effective uplink bitrate per transmitted physical resource block (PRB).

However, in practice there are trade-offs to be considered, such as radiation safety limitations and battery power consumption. When maximum power levels are reached, the wireless communication devices must focus limited transmitter power on fewer PRBs, in order to satisfy the poNominal target. With this in mind, an increase in poNominal may increase SINR and bitrate per PRB, but reduce the number of PRBs that the wireless communication device may transmit per transmission time interval (TTI).

D1 (EP-3010290-A1) describes an uplink power control method. The method involves optimizing uplink power control parameters of multiple cells based on a Key Performance Indicator (KPI) model. This model indicates a mapping relationship between the uplink power control parameters of the multiple cells and at least one KPI of a network where the multiple cells are located. The described method considers the impact of uplink power control parameters of multiple cells on a KPI of the network.

D2 (US-20160081036-A1) describes a method and device for controlling uplink power in a communication network. The method involves obtaining uplink load information of multiple cells, identifying cells of a first type (overloaded cells) and a second type (normal cells), determining cell clusters based on the cells of the first and second types and their neighboring relationships, and performing joint optimization of uplink power control parameters on each cell cluster. In D2 the optimasation is jointly performed among cells with different qualities

US-10039016-B1 describes a method and system for optimizing radio frequency (RF) in a radio access network (RAN) using machine learning (ML). The method involves identifying a target cluster of cell towers in the RAN, generating a model for collecting RAN measurements from mobile communication devices connected to the cell towers, and sending the model to client applications on the mobile devices. The method is based on generating an optimization model from a well-performing cluster (golden cluster) and applying it to the target cluster

Further, an increase in uplink power in a cell will typically also increase interference in neighbouring cells, which may reduce the effective coverage and capacity of a cell cluster formed by a group of cells neighbouring on each other. Optimal poNominal levels must therefore achieve balance between adequate uplink SINR, transmission power spread over an adequate number of PRBs and cluster throughput.

### SUMMARY

One objective is to solve, or at least mitigate, this problem in the art and thus to provide an improved method of controlling nominal uplink power level of radio cells and thus reduce interference.

This objective is achieved in a first aspect by a method of a device of controlling uplink power levels of radio cells in a wireless communications network. The method comprises grouping sets of neighboring cells into a plurality of cell clusters, identifying at least one first cell cluster comprising at least one cell being subjected to interference, the cells of the identified first cluster further having a signal quality exceeding a first signal quality threshold value and identifying at least one second cell cluster comprising at least one cell being subjected to interference, the at least one cell of the identified second cluster further having a signal quality below a second signal quality threshold value. The method further comprises creating a model based on the identified at least one first cell cluster to map a nominal uplink power level to an estimated signal quality value for said at least one first cell cluster and adjusting a nominal uplink power level of the at least one cell of the identified at least one second cell cluster by applying the nominal uplink power level derived from the created model to attain a corresponding estimated signal quality value in the at least one cell of the second cell cluster.

This objective is achieved in a second aspect by a device configured to control uplink power levels of radio cells in a wireless communications network. The device comprising a processing unit and a memory, the memory containing instructions executable by the processing unit, whereby the device is operative to group sets of neighboring cells into a plurality of cell clusters, identify at least one first cell cluster comprising at least one cell being subjected to interference, the cells of the identified first cluster further having a signal quality exceeding a signal quality threshold value and identify at least one second cell cluster comprising at least one cell being subjected to interference, the at least one cell of the identified second cluster further having a signal quality below the signal quality threshold value. The device is further operative to create a model based on the identified at least one first cell cluster to map a nominal uplink power level to an estimated signal quality value for said at least one first cell cluster and adjust a nominal uplink power level of the at least one cell of the identified at least one second cell cluster by applying the nominal uplink power level derived from the created model to attain a corresponding estimated signal quality value in the at least one cell of the second cell cluster.

In an embodiment, the model is created using machine learning.

In an embodiment, the creating of the model comprises performing a regression analysis on the identified at least one first cell cluster to create the model mapping a nominal power level to an estimated signal quality value for said at least one first cell cluster.

In an embodiment, at least one cell of the identified at least one first cell cluster has a nominal uplink power level differing from that of remaining cells in said at least one first cell cluster.

In an embodiment, the cells of the identified first cluster has a signal quality exceeding a first signal quality threshold value while the at least one cell of the identified second cluster has a signal quality below a second signal quality threshold value.

In an embodiment, the at least one cell of the identified second cluster has a lower signal quality than remaining cells in the identified second cluster.

In an embodiment, the interference further is restricted to a single radio channel.

In an embodiment, the created model is updated with a signal quality value of the identified at least one second cell cluster reflecting the adjusted nominal power level of the at least one cell of the identified at least one second cell cluster (12).

In an embodiment, the created model is updated with a signal quality value of one or more cells neighboring on the at least one cell of the identified at least one second cell cluster, the signal quality value reflecting the adjusted nominal power level of the at least one cell of the identified at least one second cell cluster.

In an embodiment, the identifying of at least one first cell cluster comprises identifying a plurality of cell clusters comprising at least one cell being subjected to interference, the cells of the identified plurality of cell clusters further having a signal quality exceeding a signal quality threshold value; and the creating of a model further comprises creating a model based on the plurality of cell clusters to map a nominal power level to an estimated signal quality value for said plurality of cell clusters.

In an embodiment, the interference should not vary more than a maximum allowable value from a nominal interference level over a time period.

Further embodiments will be described in the following.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

### BRIEF DESCRIPTION OF THE DRAWINGS

Aspects and embodiments are now described, by way of example, with reference to the accompanying drawings, in which:
Figure 1 schematically illustrates a radio access network formed by a number of radio cells each served by a radio base station, in which network embodiments may be implemented;
Figure 2 schematically illustrates a radio access network in which an embodiment is implemented;
Figure 3 shows a flowchart illustrating a method of controlling an uplink power level of radio cells according to an embodiment;
Figure 4 illustrates computation of nominal power level using a created model according to an embodiment;
Figure 5 illustrates selection of cells applying different nominal power levels according to an embodiment;
Figure 6 illustrates updating a created model with actual signal quality attained in a target cell according to an embodiment;
Figure 7 updating a created model with actual signal quality attained in cells neighbouring on the target cell according to an embodiment; and
Figure 8 illustrates a device configured to control an uplink power level of radio cells according to an embodiment.

### DETAILED DESCRIPTION

The aspects of the present disclosure will now be described more fully hereinafter with reference to the accompanying drawings, in which certain embodiments of the invention are shown.

These aspects may, however, be embodied in many different forms and should not be construed as limiting; rather, these embodiments are provided by way of example so that this disclosure will be thorough and complete, and to fully convey the scope of all aspects of invention to those skilled in the art. Like numbers refer to like elements throughout the description.

As mentioned, a number of considerations must be made upon adjusting the poNominal target value of a cell. One such consideration is the level of noise in the cell which effects the SINR of uplink signals transmitted by a wireless communication device. The noise may for instance be caused by interference from neighbouring cells or passive intermodulation (PIM) being caused by a mix of downlink signals, and may further vary over time.

As mentioned previously, the poNominal target value is broadcast in a SIB and is therefore semi-static. For this reason, adjustments of the poNominal target value can be used to compensate for semi-static noise, but it is not well-suited for compensating bursty and dynamically changing noise.

State-of-the-art methods to adjust the poNominal target value of a cell broadly fall into the following categories:
(a) computing aggregated average SINR over all cells in the network and using empirical formulas of adjusting the poNominal target value as a function of SINR, and
(b) using supervised or reinforcement learning approaches for learning optimal poNominal target values in a simulated environment.

The first-mentioned approach is based on average interference, and is therefore not able to differentiate between dynamically changing and static noise. If the poNominal target value is adjusted for dynamically changing noise the change in (semi-static) poNominal target value settings can increase wireless communication device power and uplink interference for a long time period even though the dynamically changing noise is present for only a brief fraction of that time period.

The second-mentioned approach, i.e. using simulated environments, often fails to capture the variations being experienced in real-life networks.

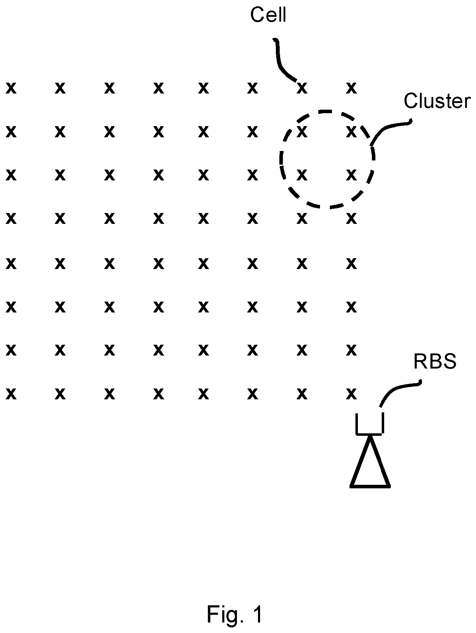

Figure 1 schematically illustrates a radio access network (RAN) formed by a number of radio cells (in this case 64) each served by a radio base station (RBS), in which network embodiments may be implemented. A cell cluster is formed by grouping a plurality of neighbouring cells. In this example and throughout the description, a cell cluster is assumed to be formed by four cells, even though in practice any number of cells may be used to form a cluster.

In practice, each RBS may set its own poNominal target value for the cell it is serving. However, an optimal poNominal target value is preferably maintained over all the cells such that no sections are present in the network with declining coverage and further such that the interference is not too high between neighbouring cells.

As an example, a poNominal target value of -117 dBm may be used for the Physical Uplink Control Channel (PUCC), while a value of -103 dBm may be used for the Physical Uplink Shared Channel (PUSCH), even though these may vary with e.g. different geographical topologies and network load.

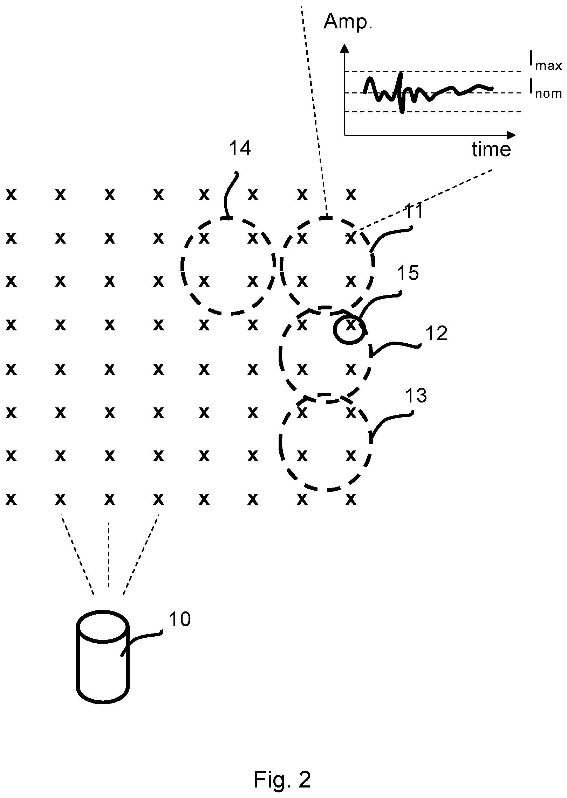

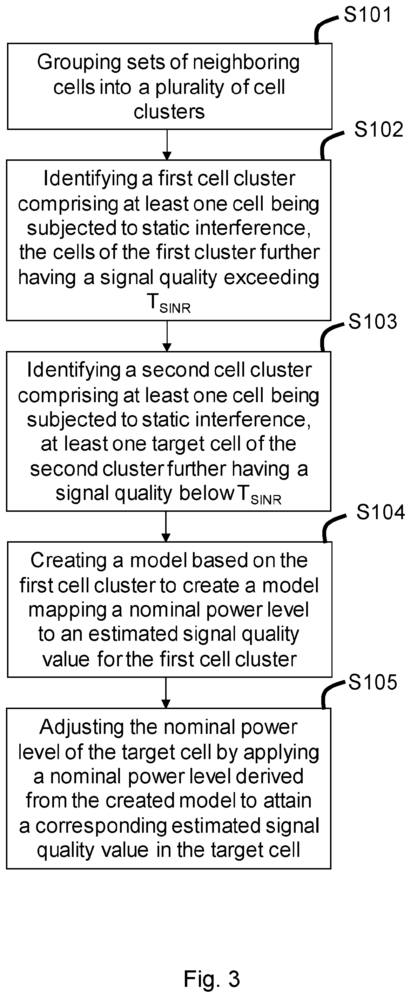

An embodiment will now be described with reference to the radio cells illustrated in Figure 2 and the flowchart illustrated in Figure 3 showing a method of controlling an uplink power level - i.e. poNominal target value - of radio cells according to an embodiment.

The method may be performed by a device 10 communicating with the RBSs, such as a mobility management entity (MME) or some other core network device, or a device in an external network upstream of the core network, such as an Internet server, or even a cloud structure.

A feature of this embodiment is to study cell clusters exhibiting high signal quality as for instance represented by the SINR of the signals, and to use the knowledge attained from that studying to improve signal quality of one or more cells in a cluster exhibiting lower signal quality.

It should be noted that preferably only cells being subjected to static, or at least semi-static, noise will be considered since as previously described adjusting the poNominal target value based on dynamically changing noise will cause even worse noise problems.

In a first step S101, sets of neighboring cells are grouped by the server 10 into a plurality of cell clusters. In this exemplifying embodiment, four clusters 11-14 are formed even though in practice tens or hundreds of clusters may be formed.

In step S102, at least one first cluster 11 is identified comprising one or more cells which is subjected to static, or at least semi-static, interference. That is, the interference in the first cluster should not vary more than a maximum allowed interference value Iₘₐₓ from a nominal interference level Iₙₒₘ over a time period.

Further, the cells in the first cluster 11 should have a signal quality exceeding a signal quality threshold value, for instance represented by SINR. In other words, SINR₁ > T_{SINR}.

In the following, the first cluster will be referred to as a *teacher cluster,* since the first cluster subsequently will be utilized to compute a poNominal target value to be applied to another cluster referred to as a *student cluster,* as will be discussed in the following.

In practice, there are typically multiple clusters meeting the teacher cluster criterion, i.e. being subjected to static interference as well as having a SINR exceeding T_{SINR}. In other words, in reality a plurality of clusters could typically be identified as teacher clusters. For instance, with reference to Figure 2, not only cluster 11 could be identified as a teacher cluster but further clusters 13 and 14 could be identified as teacher clusters.

In step S103, at least one second cluster 12 is identified comprising one or more cells which - as in the case of the first cluster 11 - is subjected to static (or at least semi-static) interference.

Further, at least one cell 15 in the second cluster 12 should have a signal quality below the signal quality threshold value, for instance represented by SINR. In other words, SINR₂ < T_{SINR}. The cell 15 will in the following be referred to as *target cell.* In an example, the target cell 15 has a SINR below 5 dB or even below 3 dB.

The second cluster 14 is thus the cluster being referred to as the student cluster, and the target cell 15 is the cell which subsequently will be subjected to a poNominal target value adjustment. In practice, further cells in the student cluster 14 may be categorized as target cells and subjected to poNominal target value adjustments.

T_{SINR} may in practice be set to a value around 3.5 but may be selectably tuned to different environments.

In an embodiment, two threshold values may be utilized where for instance SINR₁ > T_{SINR1}, while SINR₂ < T_{SINR2}. In an example, T_{SINR1} = 3.5 while T_{SINR2} = 3.0. It may further be envisaged that the lower signal quality of the target cell 15 should be monitored for an extended time period, such as e.g. 24 hours, before it is concluded that the target cell 15 indeed exhibits a lower signal quality.

Thereafter, in step S104, the device 10 creates a model based on the teacher cluster 12 which maps a nominal uplink power level, i.e. a poNominal target value, derived from the cells of the teacher cluster 14 to an estimated signal quality value of the teacher cluster 14. As will be described in the following, this will in an embodiment be performed by means of regression analysis.

In line with the previous discussion that a plurality of teacher cluster may exist in the network, it should be noted that the device may identify a plurality if teacher clusters and create a model using each of these identified teacher clusters to form an even stronger data set for creating the model, either by supplying the data of each teacher cluster to the model or by consolidating the data of the teacher clusters and supplying the consolidated data to the model.

Finally, in step S105, the created model is used to compute an appropriate poNominal target value that should be applied for a desired SINR of the target cell 15. For instance, the device 10 may use the model to determine that for a SINR of, say, 3.4 to be attained in the target cell 15, a given poNominal target value as stipulated by the created model must be applied to the target cell 15.

Advantageously, by going over the network to adjust any differing poNominal target values for a plurality target cells using the teacher cell cluster 11 as a role-model in terms of SINR being experienced by the cells in the teacher cluster 11, it is possible for the device 10 to adjust the SINR of the target cells across the network to avoid cell outliers in terms of signal quality..

A metric used for the signal quality is in this exemplifying embodiment selected to be SINR. However, a number of signal quality metrics may be envisaged, such as signal-to-noise ratio (SNR), Quality of Service (QoS), Channel Quality Indicator (CQI), etc.

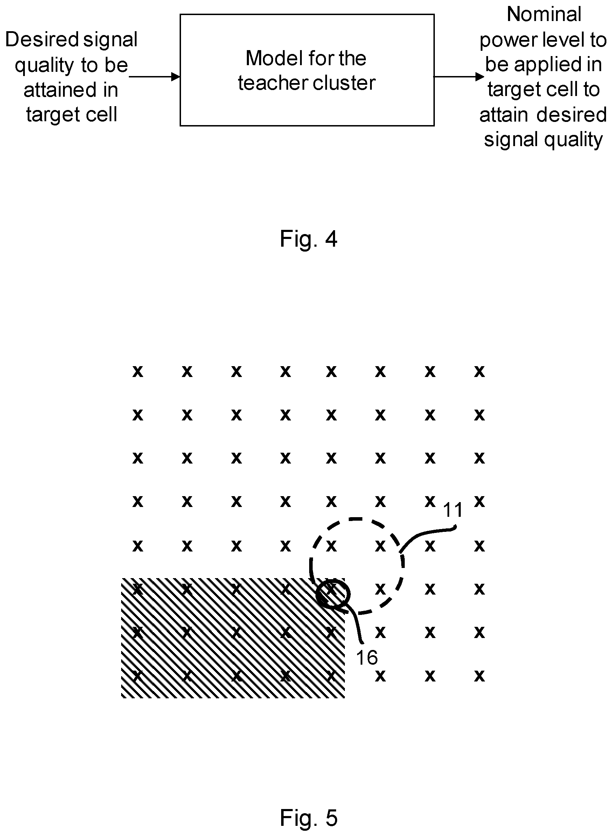

Figure 4 schematically illustrates that a desired signal quality to be attained in target cell 15 is input to the model that is being created based on the teacher cluster 11, for instance a particular SINR value. In response to the SINR value being input, the model computes and outputs a poNominal target value to be applied in the target cell 15 in order to attain the desired SINR value in the target cell 15.

As is understood, the model is continuouly updated with changing conditions in the network in order to reflect the current network conditions.

In line with the above given example, assuming that SINR₁ = 3.5 for the teacher cluster 11 while SINR₂ = 3.0 for the target cell 15 of the student cluster 11. Assuming further that a desired SINR for the target cell 15 is SINR₂ = 3.4 (it may due to practical limitations not be possible to attain as high SINR in the target cell 15 as in the teacher cluster 11); a desired SINR of 3.4 will thus be input to the model, which is created based on the poNominal target values and corresponding SINRs of the teacher cluster 11, and the model will advantageously compute and output a recommended poNominal target value estimated to result in the desired SINR upon being applied in the target cell 15.

In practice, a cell that will benefit from a poNominal change is typically a cell which exhibits a signal quality being lower than that of the remaining cells in the same cluster.

Hence, in an embodiment, the target cell 15 of the student cluster 12 should not only have a signal quality SINR₂ < T_{SINR}, but should further have a signal quality being lower than that of all the remaining cells in the student cluster 12.

As previously mentioned, only cells being subjected to static or semi-static interference is taken into consideration.

One requirement is thus that the interference of a cell cluster to be considered should not vary more than a maximum allowed interference value Iₘₐₓ from a nominal interference level Iₙₒₘ over a time period, such as a couple of days.

A further requirement that may be taken into account is that the interference of a cell cluster should be restricted to a single channel, and hence does not spread over multiple channels. In other words, the interference should be relatively narrow-band.

Whether the interference to which a cell is subjected is static or not may be determined by the device 10 using an appropriate machine-learning approach.

A number of approaches may be envisaged for determining whether or not a cell is subjected to static interference:
(a) apply rule-based thresholds or statistical analysis on normalized PUCCH/PUSCH interference values to conclude whether or not the interference is limited to a particular frequency and signal strength range,
(b) train a random forest-based classifier to identify cells being subjected to static-type interference. A window for training and testing may be varied from anywhere between 2 and 5 days,
(c) train an L1-norm logistic regression model to identify cells being subjected to static-type interference,
(d) other algorithms include L2-norm logistic regression model, Gaussian Naive Bayes classifier and multinomial classifier, and
(e) Local Interpretable Model-Agnostic Explanations (LIME) for time and SHapley Adaptive exPlanations (SHAP) analysis could alternatively be used.

In an embodiment, after having identified the teacher and student clusters 11, 12, the model for the teacher cluster 11 is created using an ML approach such as regression analysis, for instance random forest tree regression or neural network regression.

When using regression analysis to create the model for the teacher cluster 11, cells having the same poNominal target value being identified and selected to be included in the teacher cluster 11 may result in bias being induced in the regression analysis. The regression algorithm will then produce this (same) poNominal target value as a proposed value for a given signal quality, which may not best represent a teacher cluster.

Figure 5 illustrates a network where cells on white background applies a first poNominal target value, while the cells on a striped background applies a second poNominal target value. In order to avoid biasing the regression algorithm, in an embodiment a teacher cluster 11 is identified and selected to include at least one cell 16 applying a differing poNominal target value as compared to the remaining cells in the teacher cluster 11. As is understood, a combination of teacher clusters having cells with the same poNominal target value and teacher clusters having cells with differing poNominal target value may be used in order to achieve a balancing of datasets.

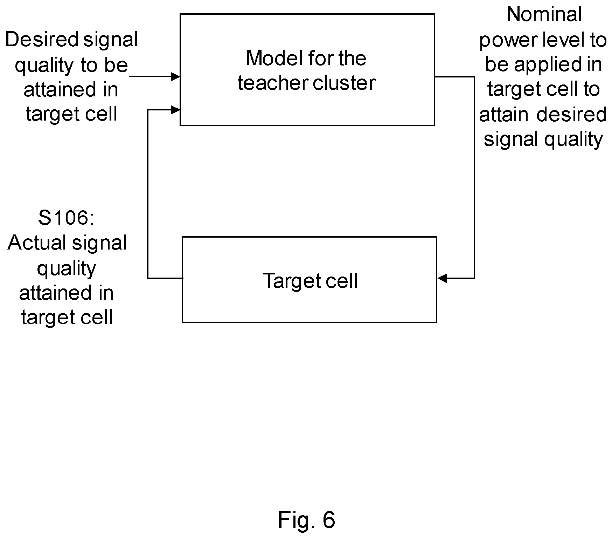

Figure 6 schematically illustrates the model of Figure 4 where a desired signal quality to be attained in target cell 15 is input to the model that is being created based on the teacher cluster 11, for instance a particular SINR value. In response to the SINR value being input, the model computes and outputs a poNominal target value to be applied in the target cell 15 in order to attain the desired SINR value in the target cell 15. The output poNominal target value may be applied in the target cell 15 during a maintenance window or at times of low traffic/load in the radio base station (RBS).

However, in this embodiment, the SINR actually attained in the target cell 15 as a result of the poNominal target value being applied in the target cell 15 is fed back in step S106 to the model such that the model is updated accordingly and advantageously takes into account the signal quality of the target cell 15 as a result of the adjustment of the target cell poNominal target value.

As is understood, in a scenario where the SINR attained in the target cell 15 does not comply with an expected result, for instance such as not reaching an expected SINR, a new poNominal target value may be derived from the created model, individual teacher clusters may be referenced to obtain a new poNominal setting for the target cell 15. An upper limit to the number of teacher clusters being referenced may be set. Further, a new target SINR value may be selected for the target cell 15.

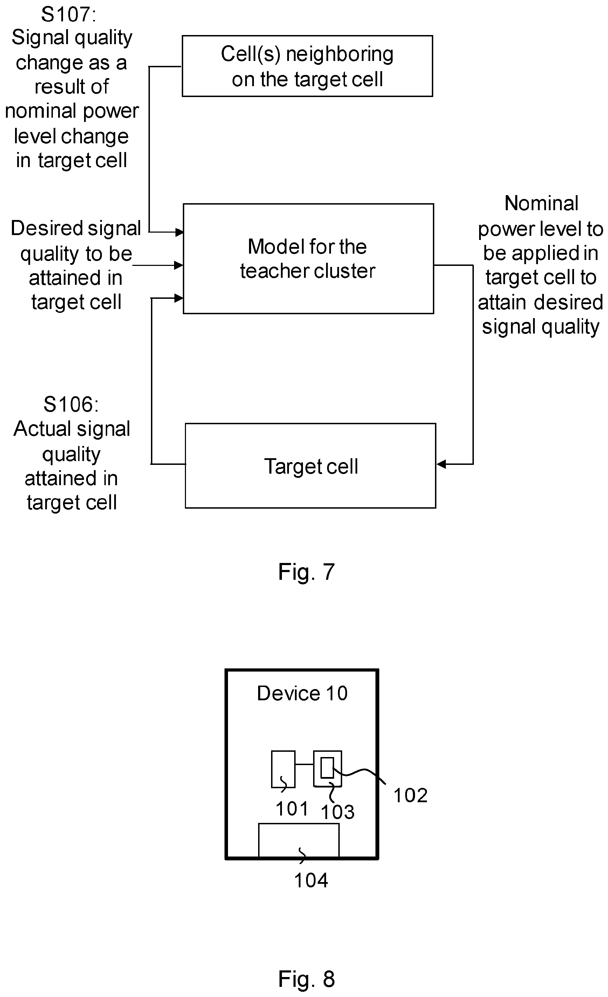

With reference to Figure 7, it is further envisaged that in case the poNominal target value is increased in the target cell 15, other cells neighbouring on the target cell 15 may experience more interference (and thus lower SINR). In an embodiment, the SINR of cells neighbouring on the target cell 15 is fed back to the model in response to the increase in the the poNominal target value for the target cell 15.

Figure 8 illustrates a device 10 configured to adjust nominal uplink power level of radio cells according to an embodiment. The steps S101 to S107 performed by the device 10 are in practice performed by a processing unit 101 embodied in the form of one or more microprocessors arranged to execute a computer program 102 downloaded to a suitable storage volatile medium 103 associated with the microprocessor, such as a Random Access Memory (RAM), or a non-volatile storage medium such as a Flash memory or a hard disk drive. The processing unit 101 is arranged to cause the device 10 to perform steps S101 to S104 according to embodiments when the appropriate computer program 102 comprising computer-executable instructions is downloaded to the storage medium 103 and executed by the processing unit 101. The storage medium 103 may also be a computer program product comprising the computer program 102. Alternatively, the computer program 102 may be transferred to the storage medium 103 by means of a suitable computer program product, such as a Digital Versatile Disc (DVD) or a memory stick. As a further alternative, the computer program 102 may be downloaded to the storage medium 123 over a network. The processing unit 101 may alternatively be embodied in the form of a digital signal processor (DSP), an application specific integrated circuit (ASIC), a field-programmable gate array (FPGA), a complex programmable logic device (CPLD), etc. The device 10 further comprises a wired or wireless interface 104 over which data may be received and transmitted.

According to an embodiment herein, the device 10 could be part of a cloud server, where the cloud server is configured to process the steps 101 to 107. Further, the cloud server may be configured to communicate with a radio base station (RBS) to share the poNominal target value to be updated therein.

Advantageously, the aspects of the present disclosure require selection of a few cells, thus making the training time of the model smaller and potentially implementable in real-time on a live network. Further, the present disclosure provides the advantage of adapting based on recent history to reflect the fluctuations in traffic and changes in the environment.

The aspects of the present disclosure have mainly been described above with reference to a few embodiments and examples thereof. However, as is readily appreciated by a person skilled in the art, other embodiments than the ones disclosed above are equally possible within the scope of the invention, as defined by the appended patent claims.

## Claims

1. A method of controlling uplink power levels of radio cells in a wireless communications network, the method being performed by a device (10) comprising:
grouping (S101) sets of neighboring cells into a plurality of cell clusters (11-14);
identifying (S102) at least one first cell cluster (11) comprising at least one cell being subjected to interference, the cells of the identified first cluster further having a signal quality exceeding a first signal quality threshold value;
identifying (S103) at least one second cell cluster (12) comprising at least one cell (15) being subjected to interference, the at least one cell (15) of the identified second cluster (12) further having a signal quality below a second signal quality threshold value;
creating (S104) a model based on the identified at least one first cell cluster (11) to map a nominal uplink power level to an estimated signal quality value for said at least one first cell cluster (11); and
adjusting (S105) a nominal uplink power level of the at least one cell (15) of the identified at least one second cell cluster (12) by applying the nominal uplink power level derived from the created model to attain a corresponding estimated signal quality value in the at least one cell (15) of the second cell cluster (12).

2. The method of claim 1, the model being created using a machine learning process.

3. The method of claims 1 or 2, the step of creating (S104) the model comprising:
performing a regression analysis on the identified at least one first cell cluster to create the model mapping a nominal uplink power level to an estimated signal quality value for said at least one first cell cluster (11).

4. The method of claim 3, wherein at least one cell of the identified (S102) at least one first cell cluster (11) has a nominal uplink power level differing from that of remaining cells in said at least one first cell cluster (11).

5. The method of any one of the preceding claims, wherein the at least one cell (15) of the identified second cluster (12) has a lower signal quality than remaining cells in the identified second cluster (12).

6. The method of any one of the preceding claims, wherein said interference further is restricted to a single radio channel.

7. The method of any one of the preceding claims, further comprising:
updating (S106) the created model with a signal quality value of the identified at least one second cell cluster (12) reflecting the adjusted nominal uplink power level of the at least one cell (15) of the identified at least one second cell cluster (12).

8. The method of any one of the preceding claims, further comprising:
updating (S107) the created model with a signal quality value of one or more cells neighboring on the at least one cell (15) of the identified at least one second cell cluster (12), the signal quality value reflecting the adjusted nominal uplink power level of the at least one cell (15) of the identified at least one second cell cluster (12).

9. The method of any one of the preceding claims, the identifying (S102) of at least one first cell cluster (11) comprising:
identifying a plurality of cell clusters (11, 13, 14) comprising at least one cell being subjected to interference, the cells of the identified plurality of cell clusters (11, 13, 14) further having a signal quality exceeding a signal quality threshold value; and the creating (S104) of a model further comprises:
creating a model based on the plurality of cell clusters (11, 13, 14) to map a nominal uplink power level to an estimated signal quality value for said plurality of cell clusters (11, 13, 14).

10. The method of any one of the preceding claims, said interference not varying more than a maximum allowable value from a nominal interference level over a time period.

11. A computer program (102) comprising computer-executable instructions for causing a device (10) to perform steps recited in any one of claims 1-10 when the computer-executable instructions are executed on a processing unit (101) included in the device (10).

12. A computer program product comprising a computer readable medium (103), the computer readable medium having the computer program (102) according to claim 11 embodied thereon.

13. A device (10) configured to control uplink power levels of radio cells in a wireless communications network, the device (10) comprising a processing unit (101) and a memory (103), said memory containing instructions (102) executable by said processing unit (101), whereby the device (10) is operative to:
group sets of neighboring cells into a plurality of cell clusters (11-14);
identify at least one first cell cluster (11) comprising at least one cell being subjected to interference, the cells of the identified first cluster further having a signal quality exceeding a signal quality threshold value;
identify at least one second cell cluster (12) comprising at least one cell (15) being subjected to interference, the at least one cell (15) of the identified second cluster (12) further having a signal quality below the signal quality threshold value;
create a model based on the identified at least one first cell cluster (11) to map a nominal uplink power level to an estimated signal quality value for said at least one first cell cluster (11); and
adjust a nominal uplink power level of the at least one cell (15) of the identified at least one second cell cluster (12) by applying the nominal uplink power level derived from the created model to attain a corresponding estimated signal quality value in the at least one cell (15) of the second cell cluster (12).

14. The device (10) of claim 13, further configured to perform the method according to claims 2-10.

## Patentansprüche

1. Verfahren zum Steuern von Uplink-Leistungspegeln von Funkzellen in einem drahtlosen Kommunikationsnetzwerk, wobei das Verfahren von einer Vorrichtung (10) durchgeführt wird, umfassend:
Gruppieren (S101) von Sätzen von Nachbarzellen in eine Vielzahl von Zellclustern (11-14);
Identifizieren (S102) mindestens eines ersten Zellclusters (11), der mindestens eine Zelle umfasst, die Störungen ausgesetzt ist, wobei die Zellen des identifizierten ersten Clusters weiter eine Signalqualität aufweisen, die einen ersten Signalqualitätsschwellenwert überschreitet;
Identifizieren (S103) mindestens eines zweiten Zellclusters (12), der mindestens eine Zelle (15) umfasst, die Störungen ausgesetzt ist, wobei die mindestens eine Zelle (15) des identifizierten zweiten Clusters (12) weiter eine Signalqualität unterhalb eines zweiten Signalqualitätsschwellenwerts aufweist;
Erstellen (S104) eines Modells basierend auf dem identifizierten mindestens einen ersten Zellcluster (11), um einen nominalen Uplink-Leistungspegel einem geschätzten Signalqualitätswert für den mindestens einen ersten Zellcluster (11) zuzuordnen; und
Anpassen (S105) eines nominalen Uplink-Leistungspegels der mindestens einen Zelle (15) des identifizierten mindestens einen zweiten Zellclusters (12) durch Anwenden des aus dem erstellten Modell abgeleiteten nominalen Uplink-Leistungspegels, um einen entsprechenden geschätzten Signalqualitätswert in der mindestens einen Zelle (15) des zweiten Zellclusters (12) zu erreichen.

2. Verfahren nach Anspruch 1, wobei das Modell unter Verwendung eines maschinellen Lernprozesses erstellt wird.

3. Verfahren nach Anspruch 1 oder 2, wobei der Schritt des Erstellens (S104) des Modells umfasst:
Durchführen einer Regressionsanalyse an dem identifizierten mindestens einen ersten Zellcluster, um das Modell zu erstellen, das einen nominalen Uplink-Leistungspegel einem geschätzten Signalqualitätswert für den mindestens einen ersten Zellcluster (11) zuordnet.

4. Verfahren nach Anspruch 3, wobei mindestens eine Zelle des identifizierten (S102) mindestens einen ersten Zellclusters (11) einen nominalen Uplink-Leistungspegel aufweist, der sich von dem der übrigen Zellen in dem mindestens einen ersten Zellcluster (11) unterscheidet.

5. Verfahren nach einem der vorstehenden Ansprüche, wobei die mindestens eine Zelle (15) des identifizierten zweiten Clusters (12) eine geringere Signalqualität aufweist als die übrigen Zellen in dem identifizierten zweiten Cluster (12).

6. Verfahren nach einem der vorstehenden Ansprüche, wobei die Störung weiter auf einen einzigen Funkkanal beschränkt ist.

7. Verfahren nach einem der vorstehenden Ansprüche, weiter umfassend:
Aktualisieren (S106) des erstellten Modells mit einem Signalqualitätswert des identifizierten mindestens einen zweiten Zellclusters (12), der den angepassten nominalen Uplink-Leistungspegel der mindestens einen Zelle (15) des identifizierten mindestens einen zweiten Zellclusters (12) widerspiegelt.

8. Verfahren nach einem der vorstehenden Ansprüche, weiter umfassend:
Aktualisieren (S107) des erstellten Modells mit einem Signalqualitätswert einer oder mehrerer Zellen, die an die mindestens eine Zelle (15) des identifizierten mindestens einen zweiten Zellclusters (12) angrenzen, wobei der Signalqualitätswert den angepassten nominalen Uplink-Leistungspegel der mindestens einen Zelle (15) des identifizierten mindestens einen zweiten Zellclusters (12) widerspiegelt.

9. Verfahren nach einem der vorstehenden Ansprüche, wobei das Identifizieren (S102) von mindestens einem ersten Zellcluster (11) umfasst:
Identifizieren einer Vielzahl von Zellclustern (11, 13, 14), die mindestens eine Zelle umfassen, die Störungen ausgesetzt ist, wobei die Zellen der identifizierten Vielzahl von Zellclustern (11, 13, 14) weiter eine Signalqualität aufweisen, die einen Signalqualitätsschwellenwert überschreitet; und das Erstellen (S104) eines Modells umfasst weiter:
Erstellen eines Modells basierend auf der Vielzahl von Zellclustern (11, 13, 14), um einen nominalen Uplink-Leistungspegel einem geschätzten Signalqualitätswert für die Vielzahl von Zellclustern (11, 13, 14) zuzuordnen.

10. Verfahren nach einem der vorstehenden Ansprüche, wobei die Störungen über einen Zeitraum hinweg um nicht mehr als einen maximal zulässigen Wert von einem nominalen Störungspegel abweichen.

11. Computerprogramm (102), das computerausführbare Anweisungen zum Veranlassen einer Vorrichtung (101) umfasst, Schritte nach einem der Ansprüche 1-10 durchzuführen, wenn die computerausführbaren Anweisungen auf einer in der Vorrichtung (10) beinhalteten Verarbeitungseinheit (101) ausgeführt werden.

12. Computerprogrammprodukt, das ein computerlesbares Medium (103) umfasst, wobei das computerlesbare Medium das Computerprogramm (102) nach Anspruch 11 darauf verkörpert aufweist.

13. Vorrichtung (10), die konfiguriert ist, um Uplink-Leistungspegel von Funkzellen in einem drahtlosen Kommunikationsnetzwerk zu steuern, wobei die Vorrichtung (10) eine Verarbeitungseinheit (101) und einen Speicher (103) umfasst, wobei der Speicher Anweisungen (102) enthält, die von der Verarbeitungseinheit (101) ausführbar sind, wobei die Vorrichtung (10) betreibbar ist, um:
Sätze von Nachbarzellen in eine Vielzahl von Zellclustern (11-14) zu gruppieren;
mindestens einen ersten Zellcluster (11) zu identifizieren, der mindestens eine Zelle umfasst, die Störungen ausgesetzt ist, wobei die Zellen des identifizierten ersten Clusters weiter eine Signalqualität aufweisen, die einen ersten Signalqualitätsschwellenwert überschreitet;
mindestens einen zweiten Zellcluster (12) zu identifizieren, der mindestens eine Zelle (15) umfasst, die Störungen ausgesetzt ist, wobei die mindestens eine Zelle (15) des identifizierten zweiten Clusters (12) weiter eine Signalqualität unterhalb eines zweiten Signalqualitätsschwellenwerts aufweist;
ein Modell basierend auf dem identifizierten mindestens einen ersten Zellcluster (11) zu erstellen, um einen nominalen Uplink-Leistungspegel einem geschätzten Signalqualitätswert für den mindestens einen ersten Zellcluster (11) zuzuordnen; und
einen nominalen Uplink-Leistungspegel der mindestens einen Zelle (15) des identifizierten mindestens einen zweiten Zellclusters (12) durch Anwenden des aus dem erstellten Modell abgeleiteten nominalen Uplink-Leistungspegels anzupassen, um einen entsprechenden geschätzten Signalqualitätswert in der mindestens einen Zelle (15) des zweiten Zellclusters (12) zu erreichen.

14. Vorrichtung (10) nach Anspruch 13, die weiter konfiguriert ist, um das Verfahren nach einem der Ansprüche 2-10 durchzuführen.

## Revendications

1. Procédé de commande de niveaux de puissance de liaison montante de cellules radio dans un réseau de communication sans fil, le procédé étant mis en œuvre par un dispositif (10) et comprenant les étapes consistant à :
regrouper (S101) des ensembles de cellules voisines en une pluralité de grappe de cellules (11-14) ;
identifier (S102) au moins une première grappe de cellules (11) comprenant au moins une cellule soumise à une interférence, les cellules de la première grappe identifiée présentant en outre une qualité de signal dépassant une première valeur de seuil de qualité de signal ;
identifier (S103) au moins une seconde grappe de cellules (12) comprenant au moins une cellule (15) soumise à une interférence, la au moins une cellule (15) de la seconde grappe identifiée (12) présentant en outre une qualité de signal inférieure à une seconde valeur de seuil de qualité de signal ;
créer (S104) un modèle sur la base de la au moins une première grappe de cellules identifiée (11) pour mapper un niveau de puissance de liaison montante nominal par rapport à une valeur de qualité de signal estimée pour ladite au moins une première grappe de cellules (11) ; et
ajuster (S105) un niveau de puissance de liaison montante nominal de la au moins une cellule (15) de la au moins une seconde grappe de cellules identifiée (12) en appliquant le niveau de puissance de liaison montante nominal dérivé du modèle créé pour obtenir une valeur de qualité de signal estimée correspondante dans la au moins une cellule (15) de la seconde grappe de cellules (12).

2. Procédé selon la revendication 1, le modèle étant créé à l'aide d'un processus d'apprentissage automatique.

3. Procédé selon la revendication 1 ou 2, l'étape de création (S104) du modèle comprenant l'étape consistant à :
effectuer une analyse de régression sur la au moins une première grappe de cellules identifiée pour créer le modèle mappant un niveau de puissance de liaison montante nominal par rapport à une valeur de qualité de signal estimée pour ladite au moins une première grappe de cellules (11).

4. Procédé selon la revendication 3, dans lequel au moins une cellule de la au moins une première grappe de cellules (11) identifiée (S102) présente un niveau de puissance de liaison montante nominal différent de celui de cellules restantes dans ladite au moins une première grappe de cellules (11).

5. Procédé selon l'une quelconque des revendications précédentes, dans lequel la au moins une cellule (15) de la seconde grappe identifiée (12) présente une qualité de signal inférieure à celle de cellules restantes dans la seconde grappe identifiée (12).

6. Procédé selon l'une quelconque des revendications précédentes, dans lequel ladite interférence est en outre limitée à un seul canal radio.

7. Procédé selon l'une quelconque des revendications précédentes, comprenant en outre l'étape consistant à :
mettre à jour (S106) le modèle créé avec une valeur de qualité de signal de la au moins une seconde grappe de cellules identifiée (12) reflétant le niveau de puissance de liaison montante nominal ajusté de la au moins une cellule (15) de la au moins une seconde grappe de cellules identifiée (12).

8. Procédé selon l'une quelconque des revendications précédentes, comprenant en outre l'étape consistant à :
mettre à jour (S107) le modèle créé avec une valeur de qualité de signal d'une ou de plusieurs cellules voisines de la au moins une cellule (15) de la au moins une seconde grappe de cellules identifiée (12), la valeur de qualité de signal reflétant le niveau de puissance de liaison montante nominal ajusté de la au moins une cellule (15) de la au moins une seconde grappe de cellules identifiée (12).

9. Procédé selon l'une quelconque des revendications précédentes, l'identification (S102) d'au moins une première grappe de cellules (11) comprenant l'étape consistant à :
identifier une pluralité de grappes de cellules (11, 13, 14) comprenant au moins une cellule soumise à une interférence, les cellules de la pluralité de grappes de cellules identifiée (11, 13, 14) présentant en outre une qualité de signal supérieure à une valeur de seuil de qualité de signal ; et la création (S104) d'un modèle comprend en outre l'étape consistant à :
créer un modèle sur la base de la pluralité de grappes de cellules (11, 13, 14) pour mapper un niveau de puissance de liaison montante nominal par rapport à une valeur de qualité de signal estimée pour ladite pluralité de grappes de cellules (11, 13, 14).

10. Procédé selon l'une quelconque des revendications précédentes, ladite interférence ne variant pas de plus d'une valeur admissible maximale par rapport à un niveau d'interférence nominal sur une période de temps.

11. Programme informatique (102) comprenant des instructions exécutables par ordinateur pour amener un dispositif (10) à effectuer des étapes citées dans l'une quelconque des revendications 1-10 lorsque les instructions exécutables par ordinateur sont exécutées sur une unité de traitement (101) incluse dans le dispositif (10).

12. Produit de programme informatique comprenant un support lisible par ordinateur (103), le support lisible par ordinateur présentant le programme informatique (102) selon la revendication 11 incorporé dans celui-ci.

13. Dispositif (10) configuré pour commander des niveaux de puissance de liaison montante de cellules radio dans un réseau de communication sans fil, le dispositif (10) comprenant une unité de traitement (101) et une mémoire (103), ladite mémoire contenant des instructions (102) exécutables par ladite unité de traitement (101), moyennant quoi le dispositif (10) est opérationnel pour :
regrouper des ensembles de cellules voisines en une pluralité de grappes de cellules (11-14) ;
identifier au moins une première grappe de cellules (11) comprenant au moins une cellule soumise à une interférence, les cellules de la première grappe identifiée présentant en outre une qualité de signal dépassant une valeur de seuil de qualité de signal ;
identifier au moins une seconde grappe de cellules (12) comprenant au moins une cellule (15) soumise à une interférence, la au moins une cellule (15) de la seconde grappe identifiée (12) présentant en outre une qualité de signal inférieure à la valeur de seuil de qualité de signal ;
créer un modèle sur la base de la au moins une première grappe de cellules identifiée (11) pour mapper un niveau de puissance de liaison montante nominal par rapport à une valeur de qualité de signal estimée pour ladite au moins une première grappe de cellules (11) ; et
ajuster un niveau de puissance de liaison montante nominal de la au moins une cellule (15) de la au moins une seconde grappe de cellules identifiée (12) en appliquant le niveau de puissance de liaison montante nominal dérivé du modèle créé pour obtenir une valeur de qualité de signal estimée correspondante dans la au moins une cellule (15) de la seconde grappe de cellules (12).

14. Dispositif (10) selon la revendication 13, configuré en outre pour mettre en œuvre le procédé selon les revendications 2-10.
